# FASCICULE DE BREVET EUROPEEN

(11) **EP 1 400 566 B1**
(45) Date de publication et mention de la délivrance du brevet: **23.01.2008**
(21) Numéro de dépôt: 03291961.5
(22) Date de dépôt: 05.08.2003
(51) Int. Cl.: C08L 53/02, C09J 153/02

(54) **Liant de coextrusion à base de polyéthylène métallocène et LLDPE cogreffes, de SBS et de PE**
Klebstoff zur Koextrusion auf der Basis von Co-Pfropfpolymerisaten von Metallocen Polyethylen und LLDPE, SBS und PE
Adhesive for coextrusion based on cografted metallocene polyethylene and LLDPE , SBS and PE

(43) Date de publication de la demande: 24.03.2004
(73) Titulaire: ARKEMA FRANCE, 92700 Colombes (FR)
(72) Inventeur: Pradel, Jean-Laurent, 27300 Bernay (FR); Pascal, Jérôme, 27410 Granchain (FR); Robert, Patrice, 27470 Serquigny (FR)
(74) Mandataire: Mouttet, Marie-Paule

(56) Documents cités:
- FR-A- 2 717 487
- FR-A- 2 806 734

## Description

La présente invention concerne un liant de coextrusion à base de polyéthylène métallocène et de LLDPE cogreffés, de copolymères blocs styrène/butadiène/styrène abrégé par SBS avec 50 à 90%, de préférence 60 à 80% en moles de styrène et de PE ainsi que la structure multicouche comprenant ce liant et les objets comprenant une telle structure.

Le document FR 2806734 de la demanderesse divulgue une composition comprenant du PE métallocène et du LLDPE non métallocène cogreffés avec de l'acide carboxylique insaturé diluée dans du SBS. Ce document ne concerne pas les structures multicouches comprenant une couche de PS. Jusqu'à présent les liants de coextrusion pour des structures comprenant au moins une couche de PS sont des copolymères éthylène/acétate de vinyle greffés avec de l'anhydride maléique.

La demanderesse a maintenant trouvé que dans une fourchette donnée de quantité de styrène dans le copolymère blocs SBS, on obtenait un liant de coextrusion permettant de lier efficacement des couches de PS à des couches, par exemple, de PE, PA et EVOH alors que ce n'est pas le cas en dehors de cette fourchette.

Ce liant permet donc l'élaboration de structures variées comprenant entre autre une couche de polystyrène (PS) avec de bonnes valeurs d'adhésion et a l'avantage de présenter une bonne tenue thermique apportée par la partie styrénique de la composition. Cet avantage est apprécié au moment de la préparation de la structure ou de l'objet réalisé à l'aide de ladite structure avec des soudures à chaud ou au moment de la pasteurisation par exemple. Un autre avantage des liants de la présente invention concerne leur fabrication. Ces liants sont préparés par mélange à l'état fondu et le plus souvent par greffage à l'état fondu. On récupère le liant sous forme de granulés à la sortie d'une extrudeuse ou de tout autre dispositif équivalent, la demanderesse a trouvé que cette granulation était beaucoup plus facile que pour les liants de type Ethylène/acétate de vinyle greffés.

L'invention a pour objet un liant de coextrusion comprenant :
- 10 à 35 % en poids d'un polymère (A) lui-même constitué d'un mélange de 80 à 20 % en poids d'un polyéthylène métallocène (A1) de densité comprise entre 0,865 et 0,915 et de 20 à 80 % en poids d'un polyéthylène LLDPE (A2) non métallocène, le et 0,915 et de 20 à 80 % en poids d'un polyéthylène LLDPE (A2) non métallocène, le mélange de polymères (A1) et (A2) étant cogreffé par un monomère de greffage choisi parmi les acides carboxyliques insaturés et leurs dérivés, la teneur du monomère de greffage dans ledit mélange étant comprise entre 30 et 100 000 ppm ;
- 40 à 60 % en poids d'un copolymère bloc styrène/butadiène/styrène (B) avec 50 à 90% en moles de styrène,
- 20 à 35 % en poids de PE (C) ;
le total faisant 100%, le mélange de (A), (B) et (C) étant tel que le MFI ou indice de fluidité à l'état fondu (ASTM D 1238 - 190°C - 2,16 kg) est compris entre 0,1 et 10 g / 10 min.

Selon un mode de réalisation le liant est caractérisé en ce que la densité de (A2) est comprise entre 0,900 et 0,950.

Selon un mode de réalisation le liant est caractérisé en ce que la proportion de monomère de greffage dans le mélange de polymères (A1) et (A2) est comprise entre 600 et 5 000 ppm.

Selon un mode de réalisation le liant est caractérisé en ce que le monomère de greffage est l'anhydride maléique.

Selon un mode de réalisation le liant est caractérisé en ce que le PE (C) a une densité comprise entre 0,870 et 0,935 et est un LLDPE ou un PE métallocène.

L'invention a également pour objet une structure multicouche caractérisée en ce qu'elle comprend une couche (L) comprenant le liant décrit précédemment et une couche (E) directement attachée à l'une des deux faces de ladite couche (L), ladite couche (E) étant une couche de polystyrène homo ou copolymère.

Selon un mode de réalisation la structure multicouche est caractérisée en ce qu' une couche (F) est directement attachée à la seconde face de la couche (L), la couche (L) étant prise en sandwich entre les couches (E) et (F), ladite couche (F) étant soit une couche de polymère choisi parmi le groupe des polyamides, des polycétones aliphatiques, des copolymères saponifiés d'éthylène et d'acétate de vinyle (EVOH), des polyéthylènes, des polyesters et des polystyrènes soit une couche métallique.

De plus l'invention concerne les objets comprenant une structure telle que décrite ci-dessus.

L'invention va maintenant être décrite en détails.

S'agissant de (A1), on désigne par polyéthylène métallocène les polymères obtenus par copolymérisation d'éthylène et d'alpha oléfine telle que par exemple propylène, butène, héxène ou octène en présence d'un catalyseur monosite constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

Ces polyéthylènes métallocènes peuvent aussi être caractérisés par leur rapport *M̅w̅*/*M̅n̅* < 3 et de préférence < 2 dans lequel *M̅w̅* et *M̅n̅* désignent respectivement la masse molaire moyenne en poids et la masse molaire moyenne en nombre. On désigne aussi par polyéthylène métallocène ceux ayant un MFR (Melt Flow Ratio ou rapport d'indice de fluidité) inférieur à 6,53 et un rapport *M̅w̅*/*̅M̅n̅*̅ supérieur à MFR moins 4,63. MFR désigne le rapport du MFI₁₀ (MFI sous une charge de 10 Kg) au MFI₂ (MFI sous une charge de 2,16 Kg). D'autres polyéthylènes métallocènes sont définis par un MFR égal ou supérieur à 6,13 et un rapport *M̅w̅*/*M̅n̅* inférieur ou égal à MFR moins 4,63.

Avantageusement la densité de (A1) est comprise entre 0,870 et 0,900.

S'agissant de (A2), le polymère (A2) est un copolymère de l'éthylène et d'une alpha-oléfine de type LLDPE (polyéthylène basse densité linéaire) et n'est pas métallocène. Les alpha-oléfines ont avantageusement de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.

La densité de (A2) est avantageusement comprise entre 0,900 et 0,950.

Le MFI ou indice de fluidité à l'état fondu de (A2) est compris entre 0,1 et 8 g/10 min (190 °C - 2,16 Kg).

Le mélange des polymères (A1) et (A2) est greffé avec un acide carboxylique insaturé, c'est-à-dire que les polymères (A1) et (A2) sont cogreffés. On ne sortirait pas du cadre de l'invention en utilisant un dérivé fonctionnel de cet acide.

Des exemples d'acides carboxyliques insaturés sont ceux ayant 2 à 20 atomes de carbone tels que les acides acryliques, méthacryliques, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) de ces acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides et leurs dérivés fonctionnels maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère l'anhydride maléique.

Divers procédés connus peuvent être utilisés pour greffer un monomère de greffage sur le mélange de polymères (A1) et (A2). Le mélange peut contenir les additifs utilisés habituellement lors la mise en oeuvre des polyoléfines à des teneurs comprises entre 10 ppm et 50 000 ppm, tels que les antioxydants à base de molécules phénoliques substituées, les agents de protections UV, les agents de mise en oeuvre tels que les amides gras, l'acide stéarique et ses sels, les polymères fluorés connus comme agents pour éviter les défauts d'extrusion, les agents anti- buée à base d'amines, les agents anti-bloquants tels que la silice ou le talc, les mélanges maîtres avec colorants et les agents nucléants entre autres.

Par exemple, ceci peut être réalisé en chauffant les polymères (A1) et (A2) à température élevée, environ 150° à environ 300°C, en présence ou en l'absence d'un solvant avec ou sans initiateur de radicaux. Des solvants appropriés pouvant être utilisés dans cette réaction sont le benzène, toluène, xylène, chlorobenzène, cumène entre autres. Des initiateurs de radicaux appropriés qui peuvent être utilisés comprennent le t(butyl-hydroperoxyde, cumène-hydroperoxyde, di-iso-propyl-benzène-hydroperoxyde, di-t-butyl-peroxyde, t-butyl-cumyl-peroxyde, dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde et méthyl-éthyl-cétone-peroxyde.

Dans le mélange de polymères (A1) et (A2) modifié par greffage obtenu de la façon susmentionnée, la quantité du monomère de greffage peut être choisie d'une façon appropriée mais elle est de préférence de 0,01 à 10% en poids, de préférence de 600 ppm à 5000 ppm, par rapport au poids de (A1) et (A2) greffés.

La quantité du monomère greffé est déterminée par dosage des fonctions succiniques par spectroscopie IRTF. Le MFI de (A) c'est-à-dire du mélange de (A1) et (A2) ayant été cogreffés est avantageusement 0,1 à 10 g/10 min.

Quant au copolymère blocs SBS (B), il s'agit d'un copolymère présentant des blocs styrène et butadiène avec une proportion de styrènes dans le copolymère de 50 à 90% en poids et de préférence de 60 à 80%.

Concernant le polyéthylène (C), il s'agit d'un polyéthylène homopolymère ou copolymère avec un monomère choisi parmi les alpha-oléfines, les esters d'acides carboxyliques insaturés ou les esters vinyliques d'acides carboxyliques saturés. Les alpha-oléfines ont été définies plus haut s'agissant de (A2). Les esters d'acides carboxyliques insaturés sont par exemple les (méth)acrylates d'alkyle dont l'alkyle a de 1 à 24 atomes de carbone. Des exemples d'acrylate ou méthacrylate d'alkyle utilisables sont notamment le méthacrylate de méthyle, l'acrylate d'éthyle, l'acrylate de n-butyle, l'acrylate d'isobutyle, l'acrylate de 2-éthylhexyle. Les esters vinyliques d'acides carboxyliques saturés sont par exemple l'acétate ou le propionate de vinyle. Le polymère (C) peut être un polyéthylène HDPE, LDPE, LLDPE, VLDPE ou un métallocène.

Le polymère (C) peut être aussi un polymère à caractère élastomérique c'est-à-dire qu'il peut être un (i) élastomère au sens de ASTM D412 c'est-à-dire un matériau qui peut être étiré à température ambiante à deux fois sa largeur, maintenu ainsi 5 minutes puis quand il est relâché il revient à moins de 10% près à sa longueur initiale ou (ii) un polymère n'ayant pas exactement ces caractéristiques précédentes mais pouvant être étiré et revenir sensiblement à sa longueur initiale.

Avantageusement (C) est un polyéthylène LLDPE ou un PE métallocène de densité comprise entre 0,870 et 0,935.

Les liants de l'invention sont utiles pour les structures multicouches comme par exemple les films, les feuilles, les tubes et les corps creux tels que les reservoirs d'essence.

La structure multicouche de la présente invention comprend une couche (L) comprenant le liant précédemment décrit et une couche (E) directement attachée à une première face de ladite couche (L). La couche (E) est une couche de polystyrène homo ou copolymère.

Une couche (F) peut également être directement attachée à la seconde face de la couche (L), la couche (L) étant prise en sandwich entre les couches (E) et (F), ladite couche (F) étant soit une couche de polymère choisi parmi le groupe des polyamides, des polycétones aliphatiques, des copolymères saponifiés d'éthylène et d'acétate de vinyle (EVOH), des polyéthylènes, des polyesters et des polystyrènes soit une couche métallique.

Mais la structure multicouche peut également comprendre une couche (L) comprenant le liant pris en sandwich entre deux couches (F).

On peut à titre d'exemple énumérer les structures suivantes, PS désignant le polystyrène, PA le polyamide, L le liant, PE le polyéthylène et EVOH le copolymère d'éthylène et d'acétate de vinyle saponifié:
■ Structures de type couche (E) / couche (L) / couche (F) : PS/L/PE, PS/L/EVOH/L/PS, PS/L/PA ;
■ Structures de type couche (E) / couche (L) / couche (F) et couche (F) / couche (L) / couche (F) : PS/L/PA/L/PE et PS/L/EVOH/L/PE

Plus spécifiquement, les polyamides sont synthétiques à longue chaîne ayant des motifs structurels du groupe amide dans la chaîne principale, tels que le PA-6, PA-6,6, PA-6,10, PA-11, PA-6/6,6 et le PA-12. Les copolymères saponifiés d'éthylène et d'acétate de vinyle ont un degré de saponification d'environ 90 à 100% en moles et sont obtenus en saponifiant un copolymère éthylène/acétate de vinyle ayant une teneur en éthylène d'environ 15 à environ 60% en moles. Les polyesters sont pris dans le groupe du polyéthylène-téréphtalate, du polybutylène-téréphtalate, du polyéthylène naphténate , de leurs mélanges ou encore des polyesters aromatiques comme les cristaux liquides polymères.

La couche métallique peut être par exemple une feuille, une pellicule ou une feuille d'un métal tel que l'aluminium, le fer, le cuivre, l'étain et le nickel, ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention.

Les différentes couches des structures de l'invention peuvent contenir des additifs tels que des charges, des stabilisants, des agents glissants, des agents antistatiques, des ignifugeants.

Les structures de l'invention peuvent être fabriquées par des procédés connus de coextrusion, d'extrusion soufflage, de la technique des thermoplastiques.

Le **tableau 1** ci -dessous regroupe les compositions de liant selon l'invention (Ex1-4) et les comparatifs (Compl-10).

Le **tableau 2** ci-dessous regroupe les forces de pelage F à t0 (temps = 0) et à t8 (correspondant à 8 jours). Ces forces sont mesurées suite à des tests de pelage réalisés entre couche de liant (L) et couche de PS et entre couche de liant (L) et couche d'EVOH. Les films utilisés pour ces tests sont des films coextrudés constitués de 3 couches pour le cas 1 : couche PS / couche liant (L) / couche PA d'épaisseur respectivement 75/5/70 en µm et de films constitués de 5 couches pour le cas 2 : couche PE / couche liant (L) / couche EVOH / couche liant (L) / couche PE d'épaisseur respectivement 20/10/10/10/80 en µm.

Ces tests ont été réalisés à une température T de 25°C et à une vitesse de pelage de 200 mm/min. On a utilisé pour réaliser ces films le PA ultramid B36FN de la société BASF, le PS 7240 et le PE 1020FN24 de la société ATOFINA et de l'EVOH à 38% d'éthylène. Le signe s correspond aux écart-type.

Le but est de démontrer que les compositions selon Ex1 à Ex4 permettent à la fois d'obtenir une adhésion correcte sur du PS et de l'EVOH.

Dans le cas du **Tableau 3**, on a mesuré les forces de pelage F à t = 0 et t = 8 jours, d'un film constitué de 5 couches : couche PS / couche liant (L) / couche EVOH / couche liant (L) / couche PS d'épaisseur respectivement 50/5/10/5/20 au niveau des interfaces mentionnées dans le tableau.

Le but est de confirmer les observations présentées précédemment dans une structure contenant à la fois du PS et de l'EVOH.

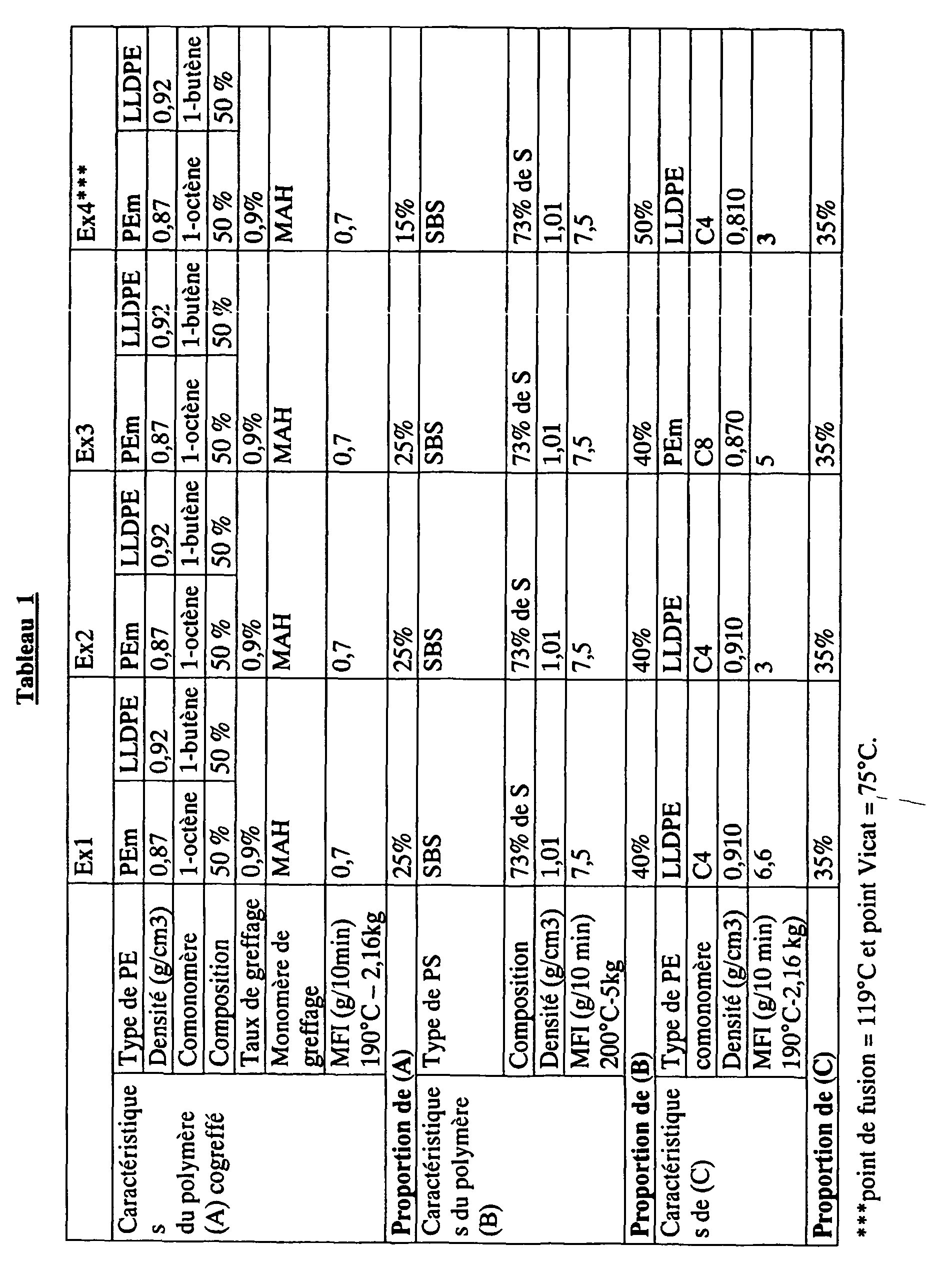

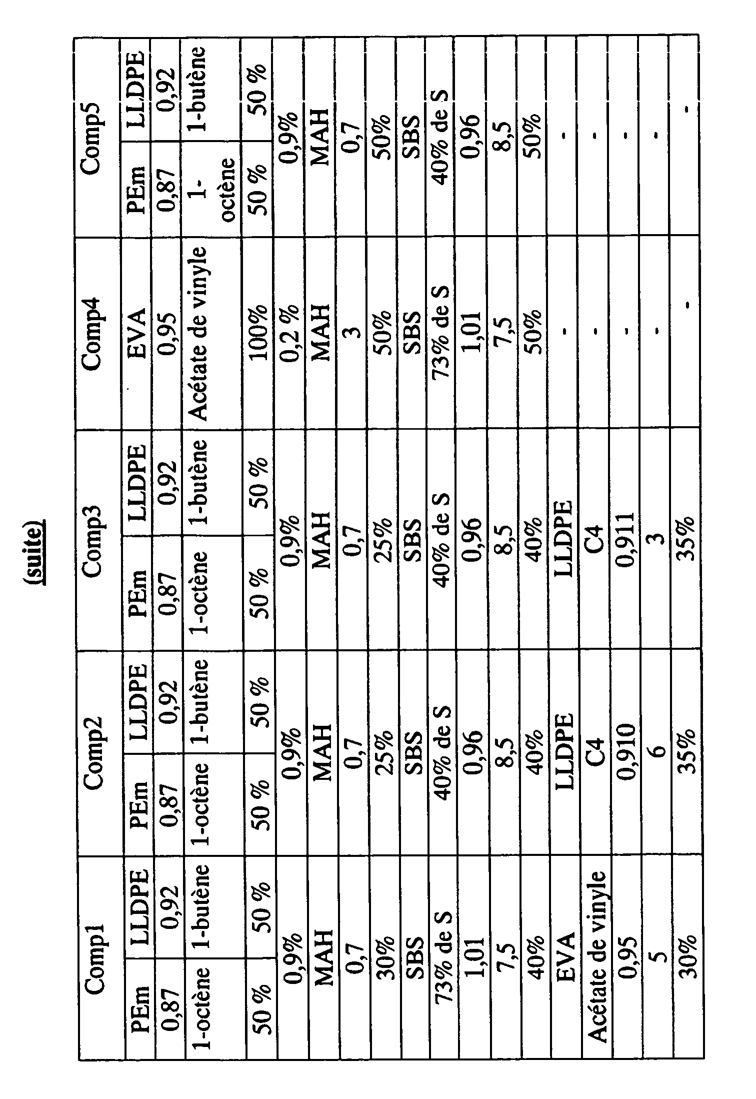

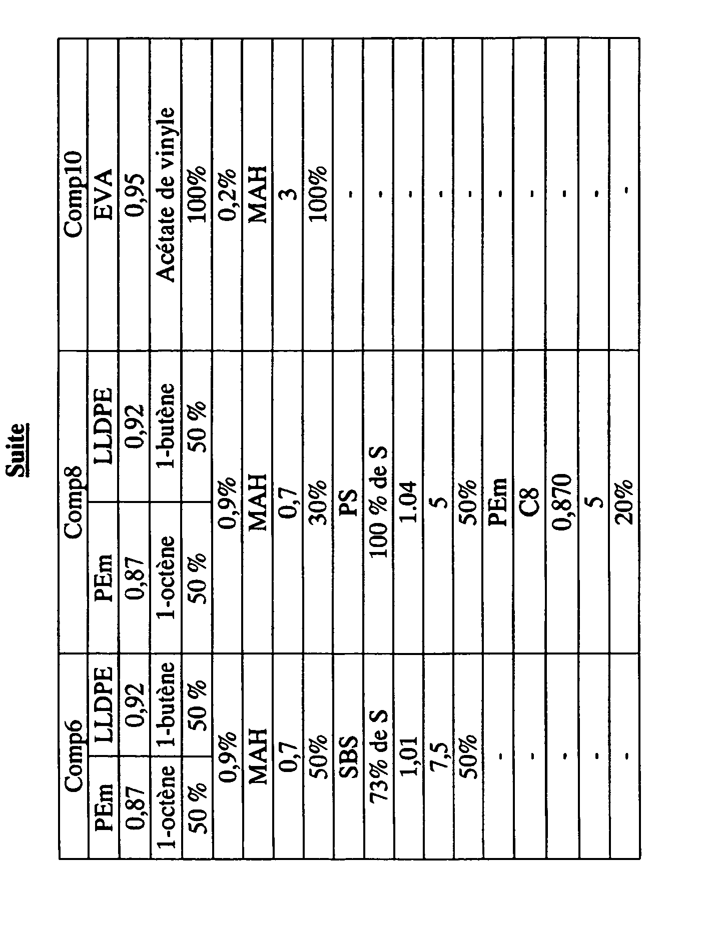

**Tableau 2**

| | CAS 1 * | | | | CAS2 ** | | | |
|---|---|---|---|---|---|---|---|---|
| | F à t0 en N/15mm | s | F à t8 en N/15mm | s | F à t0 en N/15mm | s | F à t8 en N/15mm | s |
| Ex1 | 3.4 | 0.1 | 3.2 | 0.3 | 3.4 | 0.3 | 4.2 | - |
| Ex2 | 4.7 | 0.2 | 4.4 | 0.2 | 2.9 | 0.1 | 3.6 | - |
| Ex3 | 3 | 0.2 | 3 | 0.2 | 3 | 0.2 | 4.3 | - |
| Ex4 *** | 3.4 | 0.1 | 3 | 0.2 | 3 | 0.2 | 3.2 | |
| Comp1 | 1.2 | - | 1 | 0 | 0.3 | 0 | 0 | - |
| Comp2 | 0.2 | 0 | 0.1 | 0 | 5.4 | 0.1 | 8.2 | - |
| Comp3 | 0.3 | 0.1 | 0.1 | 0 | 5 | 0.1 | 6.6 | - |
| Comp4 | 6 | 0.8 | 4.3 | 0.5 | 0.4 | 0.2 | 2 | 0.1 |
| Comp5 | 2 | 0.2 | 1.9 | 0.3 | 6.1 | 0.6 | 6.7 | 0.3 |
| Comp6 | 9.1 | 1 | 7.1 | 2.2 | 2 | 0.1 | 2.4 | 0.1 |
| Comp8 | 0.6 | 0 | 0 | 0 | 0.5 | 0 | 0 | - |
| Comp10 | 2.8 | 0.1 | 2.0 | 0.1 | 3.4 | 0.1 | 4.0 | 0.1 |

| | | | | | | | | |
|---|---|---|---|---|---|---|---|---|
| * rupture entre la couche de PS et de liant (L) sauf Comp 1 rupture entre la couche de PA et de liant (L) ** test de pelage réalisé entre la couche de PE 80 µm et la couche de liant (L) *** point de fusion = 119°C et point Vicat = 75°C | | | | | | | | |

**Tableau 3**

| | F à t0 en N/15mm | s | F à t8 en N/15mm | s | interface |
|---|---|---|---|---|---|
| Ex1 | 2.3 | 0.4 | 2.5 | 0.4 | L/PS |
| Ex2 | 3.3 | 0.2 | 5.2 | 0.2 | L/EVOH |
| Ex2 | 3.6 | 0.1 | 3.3 | 0 | L/PS |
| Ex3 | 3 | 0.1 | 3.3 | 0.2 | L/PS |
| Ex4*** | 1.9 | 0.1 | 2.6 | 0.1 | L/EVOH |
| Comp10 | 1,6 | 0 | 1,5 | 0 | L/PS |

| | | | | | |
|---|---|---|---|---|---|
| ***point de fusion = 119°C et point Vicat = 75°C. | | | | | |

## Revendications

1. Liant de coextrusion comprenant :
- 10 à 35 % en poids d'un polymère (A) lui-même constitué d'un mélange de 80 à 20 % en poids d'un polyéthylène métallocène (A1) de densité comprise entre 0,865 et 0,915 et de 20 à 80 % en poids d'un polyéthylène LLDPE (A2) non métallocène, le mélange de polymères (A1) et (A2) étant cogreffé par un monomère de greffage choisi parmi les acides carboxyliques insaturés et leurs dérivés, la teneur du monomère de greffage dans ledit mélange étant comprise entre 30 et 100 000 ppm ;
- 40 à 60 % en poids d'un copolymère bloc styrène/butadiène/styrène (B) avec 50 à 90% en moles de styrène,
- 20 à 35 % en poids de PE (C) ;
le total faisant 100%, le mélange de (A), (B) et (C) étant tel que le MFI ou indice de fluidité à l'état fondu (ASTM D 1238 - 190°C - 2,16 kg) est compris entre 0,1 et 10 g / 10 min.

2. Liant selon la revendication 1, **caractérisé en ce que** la densité de (A2) est comprise entre 0,900 et 0,950.

3. Liant selon l'une quelconque des revendications précédentes, **caractérisé en ce que** la proportion de monomère de greffage dans le mélange de polymères (A1) et (A2) est comprise entre 600 et 5 000 ppm.

4. Liant selon l'une quelconque des revendications précédentes, **caractérisé en ce que** le monomère de greffage est l'anhydride maléique.

5. Liant selon l'une quelconque des revendications précédentes, **caractérisé en ce que** le PE (C) a une densité comprise entre 0,870 et 0,935 et est un LLDPE ou un PE métallocène.

6. Structure multicouche **caractérisée en ce qu'**elle comprend une couche (L) comprenant le liant de l'une quelconque des revendications précédentes, et une couche (E) directement attachée à l'une des deux faces de ladite couche (L), ladite couche (E) étant une couche de polystyrène homo ou copolymère.

7. Structure multicouche selon la revendication 6, **caractérisée en ce qu'** une couche (F) est directement attachée à la seconde face de la couche (L), la couche (L) étant prise en sandwich entre les couches (E) et (F), ladite couche (F) étant soit une couche de polymère choisi parmi le groupe des polyamides, des polycétones aliphatiques, des copolymères saponifiés d'éthylène et d'acétate de vinyle (EVOH), des polyéthylènes, des polyesters et des polystyrènes soit une couche métallique.

8. Objet comprenant une structure selon l'une quelconque des revendications 6 à 7.

## Claims

1. Coextrusion tie comprising:
- 10 to 35 weight% of a polymer (A) itself composed of a blend of 80 to 20 weight% of a metallocene polyethylene (A1) with a density of between 0.865 and 0.915 and of 20 to 80 weight% of a non-metallocene LLDPE polyethylene (A2), the blend of polymers (A1) and (A2) being cografted by a grafting monomer chosen from unsaturated carboxylic acids and their derivatives, the content of the grafting monomer in the said blend being between 30 and 100 000 ppm;
- 40 to 60 weight% of a styrene/butadiene/styrene block copolymer (B) with 50 to 90 mol% of styrene,
- 20 to 35 weight% of PE (C);
the total making 100%, the blend of (A), (B) and (C) being such that the MFI or melt flow index (ASTM D 1238, 190°C, 2.16 kg) is between 0.1 and 10 g/10 min.

2. Tie according to Claim 1, **characterized in that** the density of (A2) is between 0.900 and 0.950.

3. Tie according to either one of the preceding claims, **characterized in that** the proportion of grafting monomer in the blend of polymers (A1) and (A2) is between 600 and 5 000 ppm.

4. Tie according to any one of the preceding claims, **characterized in that** the grafting monomer is maleic anhydride.

5. Tie according to any one of the preceding claims, **characterized in that** the PE (C) has a density of between 0.870 and 0.935 and is an LLDPE or a metallocene PE.

6. Multilayer structure, **characterized in that** it comprises a layer (L) comprising the tie of any one of the preceding claims and a layer (E) directly attached to one of the two faces of the said layer (L), the said layer (E) being a layer of polystyrene homo- or copolymer.

7. Multilayer structure according to Claim 6, **characterized in that** a layer (F) is directly attached to the second face of the layer (L), the layer (L) being sandwiched between the layers (E) and (F), the said layer (F) being either a layer of polymer chosen from the group of the polyamides, aliphatic polyketones, saponified copolymers of ethylene and of vinyl acetate (EVOH), polyethylenes, polyesters and polystyrenes or a metal layer.

8. Object comprising a structure according to either one of Claims 6 and 7.

## Patentansprüche

1. Koextrusionsbinder, umfassend:
- 10 bis 35 Gew.% eines Polymers (A), das aus einem Gemisch aus 80 bis 20 Gew.% eines Metallocen-Polyethylens (A1) mit einer Dichte zwischen 0,865 und 0,915 und aus 20 bis 80 Gew.% eines Nichtmetallocen-LLDPE-Polyethylens (A2) besteht, wobei das Gemisch der Polymere (A1) und (A2) mit einem Aufpfropfmonomer cogepfropft ist, das aus ungesättigten Carbonsäuren und Derivaten dieser ausgewählt ist, wobei der Gehalt des Aufpfropfmonomers im Gemisch zwischen 30 und 100.000 ppm beträgt;
- 40 bis 60 Gew.% aus einem Styrol-Butadien-Styrol-Blockcopolymer (B) mit 50 bis 90 Mol-% Styrol,
- 20 bis 35 Gew.% PE (C);
wobei die Gesamtheit 100 % ergibt, wobei das Gemisch aus (A), (B) und (C) derart ist, dass der MFI oder Schmelz-Index (ASTM D 1238 - 190 °C - 2,16 kg) zwischen 0,1 und 10 g/10 min. beträgt.

2. Binder nach Anspruch 1, **dadurch gekennzeichnet, dass** die Dichte von (A2) zwischen 0,900 und 0,950 beträgt.

3. Binder nach einem der vorangegangenen Ansprüche, **dadurch gekennzeichnet, dass** der Anteil des Aufpfropfmonomers im Gemisch der Polymere (A1) und (A2) zwischen 600 und 5.000 ppm beträgt.

4. Binder nach einem der vorangegangenen Ansprüche, **dadurch gekennzeichnet, dass** das Aufpfropfmonomer Maleinsäureanhydrid ist.

5. Binder nach einem der vorangegangenen Ansprüche, **dadurch gekennzeichnet, dass** das PE (C) eine Dichte zwischen 0,870 und 0,935 aufweist und ein Metallocen-LLDPE oder Metallocen-PE ist.

6. Mehrschichtstruktur, **dadurch gekennzeichnet, dass** sie eine Schicht (L), die den Binder nach einem der vorangegangenen Ansprüche umfasst, und eine Schicht (E), die direkt an einer der beiden Seiten der Schicht (L) anhaftet, aufweist, wobei die Schicht (E) eine Polystyrol-Homo- oder Copolymerschicht ist.

7. Mehrschichtstruktur nach Anspruch 6, **dadurch gekennzeichnet, dass** eine Schicht (F) direkt an der zweiten Seite der Schicht (L) anhaftet, wobei die Schicht (L) sandwichartig zwischen den Schichten (E) und (F) angeordnet ist, wobei die Schicht (F) entweder eine Polymerschicht, die aus der Gruppe der Polyamide, der aliphatischen Polyketone, der verseiften Ethylen- und Vinylacetat-Colpolymere (EVOH), der Polyethylene, der Polyester und der Polystyrole ausgewählt ist, oder eine Metallschicht ist.

8. Gegenstand, der eine Struktur nach einem der Ansprüche 6 und 7 aufweist.
